# EUROPÄISCHE PATENTANMELDUNG

(11) **EP 0 548 525 A1**
(43) Veröffentlichungstag der Anmeldung: **30.06.1993**
(21) Anmeldenummer: 92119331.4
(22) Anmeldetag: 12.11.1992
(51) Int. Cl.: A01M 23/18

(54) **Lebendfangkastenfalle**

(30) Priorität: 21.12.1991 DE 9115899 U
(71) Anmelder: Claas, Günther, D-49154 Bohmte (DE)
(72) Erfinder: Freimann, Johannes, W-4508 Bohmte (DE)

(57) **Zusammenfassung**

Die Erfindung betrifft eine Lebendfangkastenfalle, bestehend aus Fangkammer und Köderkammer, wobei beide Kammern durch je eine Stirnwand verschlossen sind und schlägt vor, zum verletzungsfreien Fang vorbestimmten Wildes die austauschbare Stirnwand der Fangkammer mit einer auf das zu fangende Wild abgestimmten Einlauföffnung zu versehen und der nach Wahl verwendeten Stirnwand zur Abdeckung von deren Einlauföffnung eine Schwenkklappe zuzuordnen.

## Beschreibung

Die Erfindung betrifft eine Lebendfangkastenfalle, dessen Innenraum eine Fangkammer und eine von dieser durch eine feste Wand abgetrennte Köderkammer aufweist, wobei die Köderkammer sowie die Fangkammer nach außen durch eine Stirnwand verschlossen sind, die als Schieber ausgebildet sind.

Eine derartige Falle ist beispielsweise aus der deutschen Gebrauchsmusterschrift 8225000 bekannt. Dabei ist die den Fangraum nach außen abschließende Stirnwand als Schieber ausgebildet, der in seiner Offenstellung verriegelt ist. Die Verriegelung wird von einer im inneren des Fangraums vorhandenen bewegbaren Bodenplatte gelöst, sobald das zu fangende Wild auf diese auftritt. Der Nachteil einer so aufgebauten Falle besteht darin, daß aufgrund der relativ großen Einlauföffnung auch Wild in die Falle gelangen kann, welches gar nicht gefangen werden soll. Ein weiterer Nachteil ist darin zu sehen, daß der Schieber schon herabfällt, bevor das zu fangende Wild ganz in den Fangraum eingelaufen ist, und zwar aus dem Grund, weil die Verriegelung des hochgestellten Schiebers durch die bis zum Eingang reichende Bodenplatte gelöst wird, sobald das Wild auf diese auftritt. Ernsthafte Verletzungen können daher nicht ausgeschlossen werden, so daß das Fangen mit derartigen Fallen als nicht waidgerecht angesehen werden muß. Der vorliegenden Erfindung liegt daher das Problem zugrunde, eine Kastenfalle der eingangs näher bezeichneten Art so auszugestalten, daß das Wild artgerecht gefangen werden kann. Das wird erfindungsgemäß dadurch erreicht, daß die Stirnwand der Fangkammer eine auf das zu fangende Wild abgestimmte Einlauföffnung aufweist, wobei die Stirnwand gegen andere Stirnwände mit unterschiedlich gestalteten Einlauföffnungen austauschbar ist und daß der Stirnwand eine schwenkbare Klappe zugeordnet ist, die in ihrer abgeschwenkten Lage die Einlauföffnung von innen her abdeckt. Auf diese Weise wird erreicht, daß entsprechend der Größe der in der eingesetzten stirnwand vorhandenen Einlauföffnung nur das Wild in die Falle gelangen kann, was tatsächlich auch gefangen werden soll. Die der Stirnwand zugeordnete Klappe ist in an sich bekannter Weise in ihrer oberen die Einlauföffnung freigebenden Lage von einem Riegel gehalten, welcher über einem im innern der Kastenfalle vorgesehenen Seilzug mit einer vom zu fangenden Wild betätigbaren Bodenplatte in Verbindung steht. Dabei ist in vorteilhafter Weise die Länge der Bodenplatte kürzer als die halbe Länge der Fangkastenkammer; sie ist in dem der Einlauföffnung abgewandten Ende des Fangraums angeordnet. Hierdurch wird erreicht, daß das Wild schon ganz in die Fangkammer eingelaufen sein muß, bevor es die Bodenplatte berührt und den Schließmechanismus auslöst. Verletzungen des Wildes durch die herabfallende Schließklappe sind auf diese Weise völlig ausgeschlossen. Um zu erreichen, daß sich die Aromastoffe von der Köderkammer aus frei in der Fangkammer verteilen können, ist die die Köderkammer von dar Fangkammer trennende Wand schräg angestellt, wodurch sich eine große Wandfläche ergibt, in die eine Vielzahl von Unterbrechungen einbracht werden kann. Damit die Kastenfalle auch in geschlossenem Zustand genügend belüftet wird, weist sie in ihrer oberen Abdeckung Belüftungsöffnungen auf, die in Richtung auf die die Köderkammer verschließende Stirnwand hin schräg verlaufen. Durch diese schräg verlaufenden Bohrungen wird erreicht, daß möglichst wenig Licht in die Falle einfällt, so daß das gefangene Wild ruhiggestellt ist. Nach einem weiteren Erfindungsmerkmal ist die den Köderraum nach außen abschließende Stirnwand als Schieber ausgebildet, wodurch eine freie Zugänglichkeit zum Köderraum gewährleistet ist.

Beim Aufstellen von Kastenfallen beobachtet man immer wieder, daß das Wild zunächst äußerst mißtrauisch reagiert und sich erst langsam an das Vorhandensein der Falle gewöhnt. Je länger dies dauert, umsomehr verflüchtigen sich die im Köderraum vorhandenen Duftstoffe, so daß unter Umständen überhaupt kein Wild mehr gefangen werden kann. Um diesen Nachteil zu vermeiden schlägt die Erfindung vor, daß der Kastenfalle ein seiner äußeren Kontour angepaßter Kasten zugeordnet ist, in den die Falle einschiebbar ist. Dieser Kasten kann nun Wochen vorher dort aufgestellt werden, wo zum späteren Zeitpunkt gefangen werden soll. Das Wild gewöhnt sich an den Anblick dieses Kastens und bemerkt nicht, wenn in diesen Kasten die eigentliche Falle eingeschoben wird. Der dann dieser Kastenfalle entströmende frische Ködergeruch lockt das Wild unmittelbar an, wodurch es in die Falle einläuft und gefangen werden kann.

Um die Kastenfalle auch dann öffnen zu können, wenn ein Transportkäfig benutzt wird, der vor die zu öffnende Einlauföffnung gesetzt wird, ist in weiterer Ausgestaltung der Erfindung mit der oberen Fallenabdeckung ein abgebogener Hebel einendig verriegelbar, dessen anderes Ende von oben an der in Schließstellung befindlichen schwenkbaren die Einlauföffnung verschließende Klappe anliegt. Durch herabdrücken des Hebels kann dann die Klappe aufgeschwenkt werden, ohne daß es erforderlich ist, in diesem Bereich mit den Händen zu manipulieren.

Die Erfindung schlägt vor, die Kastenfalle im Querschnitt quadratisch oder rund auszubilden.

Im Folgenden soll die Erfindung anhand eines Ausführungsbeispieles und mehrerer dieses scheamtisch darstellender Figuren näher erläutert werden. Dabei zeigt:
- Fig. 1: die erfindungsgemäße Kastenfalle in der Seitenansicht im Schnitt
- Fig. 2: die in Fig. 1 dargestellte Falle in der Draufsicht im Schnitt,
- Fig. 3: einen Teil der in Fig. 1 dargestellten Kastenfalle mit angesetztem Transportkäfig,
- Fig. 4: die erfindungsgemäße Kastenfalle in perspektivischer Darstellung und
- Fig. 4: die erfindungsgemäße Kastenfalle in perspektivischer Darstellung in Verbindung mit einem Abdeckkasten.

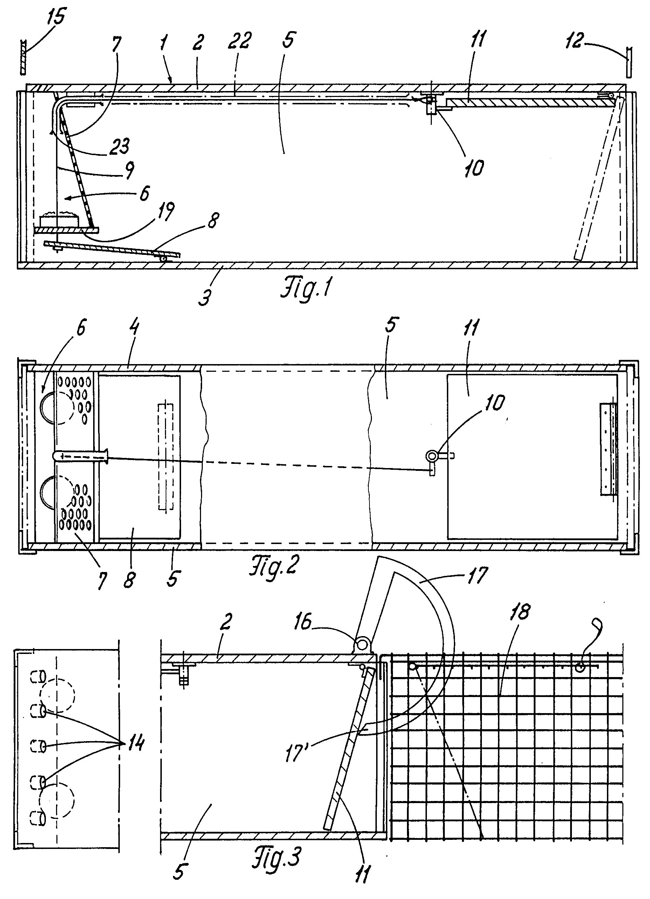

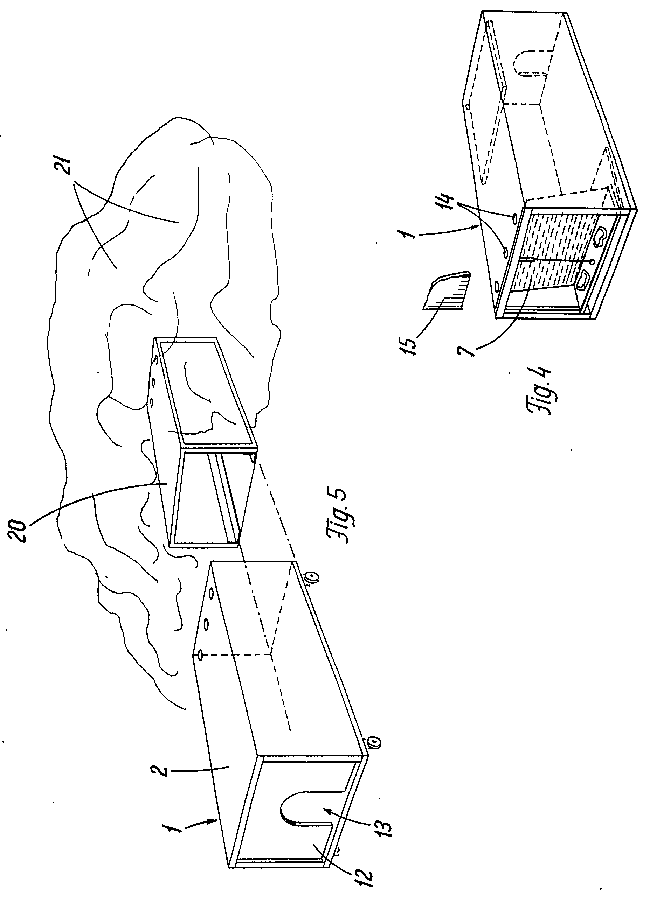

Mit 1 ist eine Lebendkastenfalle bezeichnet, welche eine obere und eine untere Abdeckung 2 bzw. 3, sowie Seitenwände 4 und 5 aufweist. Der Innenraum dieser Lebendkastenfalle ist in einen Fangraum 5 und einen Köderraum 6 aufgeteilt, wobei die Räume von einander durch eine schräg angestellte Wand 7 getrennt sind, in die eine Vielzahl von Löchern eingebracht ist. Im Bereich dieser Wand ist eine schwenkbar gelagerte Bodenplatte 8 vorgesehen, die über einen Seilzug 9 mit einem Riegel 10 in Verbindung steht. Dieser Riegel ist verdrehbar ausgebildet und nimmt in den Figuren 1 und 2 eine Stellung ein, in welcher eine schwenkbare Klappe 11 in ihrer Offenstellung gehalten wird. Nach lösen des Riegels 10 durch Betätigung der Bodenplatte 8 fällt die Klappe 11 in ihre in Fig. 1 mit gestrichelten Linien dargestellte Lage und verschließt den Fangraum 5 nach außen. Wie aus der Figur 1 zu entnehmen, ist dieser schwenkbaren Klappe 11 eine als Schieber ausgebildete Stirnwand 12 zugeordnet, welche mit einer Einlauföffnung 13 (s. Fig. 5) ausgestattet ist. Je nach zu fangendem Wild ist die Stirnwand 12 gegen andere Stirnwände austauschbar mit entsprechend dem zu fangenden Wild eingebrachten Einlauföffnungen 13. Um den Fangraum belüften zu können, wenn ein Tier eingelaufen ist, weist die obere Abdeckung 2 der Falle 1 Durchgangsbohrungen 14 im Bereich des Köderraums 6 auf, welche schräg in Richtung auf die Stirnwand (Schieber 15) verlaufen, die den Köderraum nach außen abschließt. Diese Stirnwand 15 ist ebenfalls als Schieber ausgebildet, um freien Zugang zum Köderraum 6 zu erhalten. Wie aus der Fig. 3 zu erkennen, weist die obere Abdeckung 2 im Einlaufbereich eine Lagerkonsole 16 auf, mit welcher ein abgebogener Hebel 17 einendig verriegelt werden kann, dessen anderes Ende 17' unter Schwerkraft an der verschwenkbaren Klappe 11 anliegt, so daß diese durch herabdrücken des abgebogenen Hebels 17 geöffnet werden kann und das Wild in den vor die Einlauföffnung 13 gesetzten Transportkäfig 18 läuft.

Da einerseits die Bodenplatte 8 zwecks Bildung eines entsprechenden Hebelarms eine bestimmte Länge aufweisen muß, einerseits aber verhindert werden soll, daß das zu fangende Wild bereits auf die Bodenplatte 8 auftritt, bevor es ganz in den Fangraum 5 eingelaufen ist, weist der Boden 19 der Köderkammer 6 einen Abstand vom Boden 3 der Kastenfalle 1 auf, so daß sich die Bodenplatte 8 in diesen hierdurch gebildeten Freiraum erstrecken kann und damit zum Teil unterhalb des Köderraums 6 verläuft.

Wie aus der Fig. 5 zu erkennen ist, ist ein Abdeckkasten 20 in einem Buschwerk 21 untergebracht, der in seinen Abmessungen so ausgebildet ist, daß die Kastenfalle 1 in den Abdeckkasten 20 einschiebbar ist.

Zu erwähnen wäre noch, daß der die Klappe 11 bestätigende Seilzug 9 in einem Rohr 22 und einem Winkel 23 geführt ist, um zu verhindern, daß das Wild das Seil 9 durchbeißt und sich in diesem verfängt.

## Patentansprüche

1. Lebendfangkastenfalle, dessen Innenraum eine Fangkammer und eine von dieser durch eine feste Wand abgetrennte Köderkammer aufweist, wobei die Köderkammer sowie die Fangkammer durch eine Stirnwand verschlossen sind, von denen die Stirnwand der Fangkammer als Schieber ausgebildet ist,
**dadurch gekennzeichnet,**
daß die Stirnwand 12 der Fangkammer 5 eine auf das zu fangende Wild abgestimmte Einlauföffnung 13 aufweist, wobei die Stirnwand 12 gegen andere Stirnwände mit unterschiedlich gestalteten Einlauföffnungen austauschbar ist und daß der Stirnwand 12 eine schwenkbare Klappe 11 zugeordnet ist, die in ihrer abgeschwenkten Lage die Einlauföffnung 13 von innen her abdeckt.

2. Lebendfangkastenfall nach Anspruch 1,
**dadurch gekennzeichnet,**
daß die Klappe 11 in ihrer oberen die Einlauföffnung 13 freigebenden Lage von einem Riegel 10 gehalten ist, welcher über einen im inneren der Kastenfalle 1 vorgesehenen Seilzug 9 mit einer vom zu fangenden Wild betätigbaren Bodenplatte 8 in Verbindung steht.

3. Lebendfangkastenfalle nach den Ansprüchen 1 und 2,
**dadurch gekennzeichnet,**
daß die Länge der Bodenplatte 8 kürzer ist als die halbe Länge der Fangkammer 5 und in dem der Einlauföffnung abgewandten Ende der Fangkammer angeordnet ist.

4. Lebenfangkastenfalle nach den Ansprüchen 1 bis 3,
**dadurch gekennzeichnet**,
daß die Fangkammer 5 zumindest die vierfache Länge aufweist wie die Köderkammer 6.

5. Lebendfangkastenfalle nach den Ansprüchen 1 bis 4,
**dadurch gekennzeichnet,**
daß die Trennwand 7 zwischen Fangkammer 5 und Köderkammer 6 schräg verläuft.

6. Lebendfangkastenfalle nach einem der Ansprüch 1 bis 5,
**dadurch gekennzeichnet,**
daß die Kastenfalle 1 in ihrer oberen Abdeckung Belüftungsbohrungen im Bereich der Köderkammer 6 aufweist.

7. Lebendfangkastenfalle nach einem der Ansprüche 1 bis 6,
**dadurch gekennzeichnet,**
daß die in der oberen Abdeckung angebrachten Lüftungsbohrungen 14 in Richtung auf die die Köderkammer 6 verschließende Stirnwand 15 hin schräg verlaufen.

8. Lebenfangkastenfalle nach einem der Ansprüche 1 bis 7,
**dadurch gekennzeichnet,**
daß die die Köderkammer 6 abschließende Stirnwand 15 als Schieber ausgebildet ist.

9. Lebenfangkastenfalle nach einem der Ansprüche 1 bis 8,
**dadurch gekennzeichnet,**
daß der Kastenfalle 1 ein seiner äußeren Kontour angepaßter Abdeckkasten 20 zugeordnet ist, in den die Falle 1 einschiebbar ist.

10. Lebendfangkastenfalle nach einem der Ansprüche 1 bis 9,
**dadurch gekennzeichnet**,
daß mit der oberen Abdeckung 2 ein abgebogener Hebel 17 einendig verriegelbar ist, dessen anderes Ende von außen an der in Schließstellung befindlichem schwenkbaren die Einlauföffnung 13 verschließenden Klappe 11 anliegen.

11. Lebendfangkastenfalle nach einem der Ansprüche 1 bis 10,
**dadurch gekennzeichnet,**
daß die Kastenfalle als Rohrfalle mit ansonsten identischem Aufbau ausgebildet ist.

12. Lebendfangkastenfalle nach einem der Ansprüche 1 bis 11,
**dadurch gekennzeichnet,**
daß der Boden 19 der Köderkammer 6 oberhalb der unteren Abdeckung 3 der Kastenfalle 1 verläuft, wobei sich die vom Wild zu betätigende Bodenplatte 8 teilweise unterhalb des Bodens 19 der Köderkammer 6 erstreckt.
